# EUROPEAN PATENT APPLICATION

(11) **EP 3 300 273 A1**
(43) Date of publication of application: **28.03.2018**
(21) Application number: 16799921.8
(22) Date of filing: 19.05.2016
(51) Int. Cl.: H04J 99/00, H04W 16/28, H04W 24/10, H04W 88/02

(54) **USER TERMINAL, WIRELESS BASE STATION, AND WIRELESS COMMUNICATION METHOD**

(30) Priority: 22.05.2015 JP 2015104879
(71) Applicant: NTT DOCOMO, INC., Chiyoda-ku Tokyo 100-6150 (JP)
(72) Inventor: SANO, Yousuke, Tokyo 100-6150 (JP); TAKEDA, Kazuaki, Tokyo 100-6150 (JP); NAGATA, Satoshi, Tokyo 100-6150 (JP); BENJEBBOUR, Anass, Tokyo 100-6150 (JP); KISHIYAMA, Yoshihisa, Tokyo 100-6150 (JP)
(74) Representative: Hoffmann Eitle
(86) International application number: PCT/JP2016/064880
(87) International publication number: WO 2016/190215

(57) **Abstract**

To reduce a reception processing load, while obtaining gain of Non-Orthogonal Multiple Access (NOMA), in the case of transmitting a downlink signal using the NOMA scheme, a user terminal according to one aspect of the present invention is provided with a transmission section that transmits a plurality of precoding matrix indicators (PMIs) to a radio base station, and a reception section that receives, from the radio base station, a downlink signal that is non-orthogonally multiplexed with a downlink signal to another user terminal determined based on the plurality of PMIs and that is multiplied by the same precoding matrix as that of the downlink signal to another user terminal.

## Description

### Technical Field

The present invention relates to a user terminal, radio base station and radio communication method in the next-generation mobile communication system.

### Background Art

In UMTS (Universal Mobile Telecommunications System) networks, for the purpose of higher data rates, low delay and the like, Long Term Evolution (LTE) has been specified (Non-patent Document 1). Then, for the purpose of wider bands and higher speed than LTE, a successor system called LTE-Advanced (also called LTE-A) to LTE has been studied and specified as LTE Rel. 10-12.

In LTE and LTE-Advanced, as a downlink radio access scheme, Orthogonal Frequency Division Multiple Access (OFDMA) is used. In the future radio communication systems (from LTE Rel. 13 onward), in OFDMA, it has been studied multiplexing a plurality of user terminals into the same radio resources to improve the communication capacity (MUST: Multiuser Superposition Transmission).

### Citation List

### Non-patent Document

[Non-patent Document 1] 3GPP TS 36.300 "Evolved Universal Terrestrial Radio Access (E-UTRA) and Evolved Universal Terrestrial Radio Access Network (E-UTRAN); Overall description; Stage 2"

### Summary of Invention

### Technical Problem [0005]

As a downlink radio access scheme to actualize the above-mentioned MUST, considered is Non-Orthogonal Multiple Access (NOMA) based on the premise of interference cancellation on the reception side. In NOMA, downlink signals to a plurality of user terminals are superposed on the same radio resources (e.g. time and/or frequency), are non-orthogonally multiplexed (power-multiplexed) in the power region, and are transmitted.

In NOMA, it is expected that gain increases, as the number of a plurality of user terminals (paring user terminals) subjected to non-orthogonal multiplexing increases. However, in intending to increase the number of paring terminals to obtain gain of NOMA, there is the risk that a reception processing load increases on the user terminal. On the other hand, in intending to reduce the reception processing load, the number of paring terminals is limited, and there is the risk that it is not possible to efficiently obtain gain of NOMA.

The present invention was made in view of such a respect, and it is an object of the invention to provide a radio base station, user terminal and radio communication method for enabling a reception processing load to be reduced, while obtaining gain of Non-Orthogonal Multiple Access (NOMA), in the case of transmitting a downlink signal using the NOMA scheme.

### Solution to Problem

A user terminal according to one aspect of the present invention is a user terminal that receives a downlink signal using a Non-Orthogonal Multiple Access (NOMA) scheme, and is characterized by having a transmission section that transmits a plurality of precoding matrix indicators (PMIs) to a radio base station, and a reception section that receives, from the radio base station, a downlink signal that is non-orthogonally multiplexed with a downlink signal to another user terminal determined based on the plurality of PMIs and that is multiplied by the same precoding matrix as that of the downlink signal to another user terminal.

### Advantageous Effect of the Invention

According to the present invention, it is possible to reduce the reception processing load, while obtaining gain of NOMA, in the case of transmitting a downlink signal using the Non-Orthogonal Multiple Access (NOMA) scheme.

### Brief Description of Drawings

FIG. 1 contains schematic explanatory diagrams of NOMA;
FIG. 2 is a diagram showing one example of a configuration of a radio base station in NOMA;
FIG. 3 contains diagrams showing one example of configurations of user terminals in NOMA;
FIG. 4 is an explanatory diagram of one example of closed loop control in NOMA;
FIG. 5 contains explanatory diagrams of the relationship between gain of NOMA and the number of paring terminals;
FIG. 6 is a diagram showing one example of feedback of a PMI in non-NOMA;
FIG. 7 is a diagram showing one example of feedback of a plurality of PMIs in NOMA;
FIG. 8 is an explanatory diagram of one example of feedback of a plurality of PMIs according to Aspect 1;
FIG. 9 is an explanatory diagram of one example of CSI request fields according to Aspect 4;
FIG. 10 is a diagram showing one example of a schematic configuration of a radio communication system according to this Embodiment;
FIG. 11 is a diagram showing one example of an entire configuration of a radio base station according to this Embodiment;
FIG. 12 is a diagram showing one example of a function configuration of the radio base station according to this Embodiment;
FIG. 13 is a diagram showing one example of an entire configuration of a user terminal according to this Embodiment; and
FIG. 14 is a diagram showing one example of a function configuration of the user terminal according to this Embodiment.

### Description of Embodiments [0011]

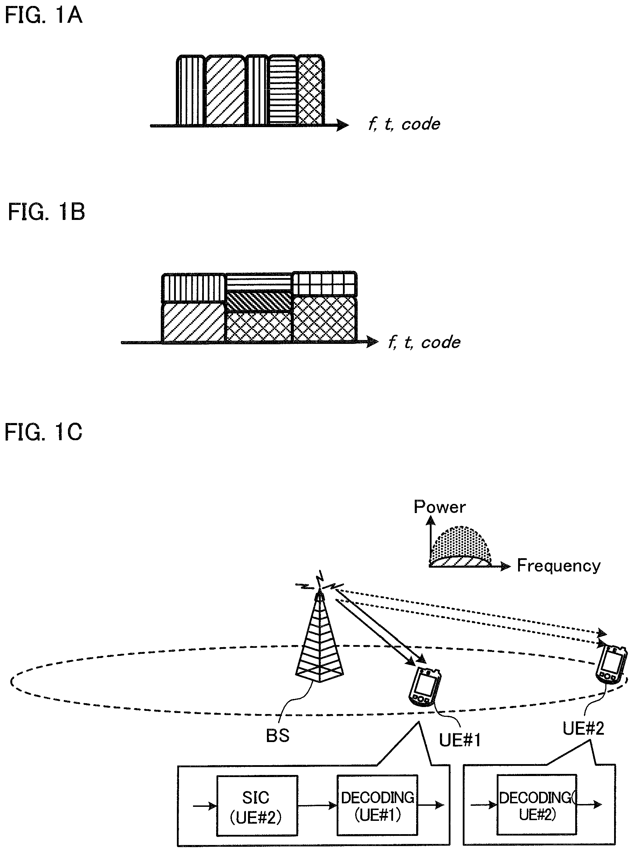

FIG. 1 contains schematic explanatory diagrams of NOMA. In the conventional radio access scheme, as shown in FIG. 1A, downlink signals to a plurality of user terminals are subjected to orthogonal multiplexing by at least one of the frequency domain (f), time domain (f) and code domain. On the other hand, in NOMA, as shown in FIG. 1B, downlink signals to a plurality of user terminals are superposed on the same radio resources (at least one of frequency, time and code), and are non-orthogonally multiplexed (power-multiplexed) in the power domain.

FIG. 1C illustrates the case where a radio base station (eNB: eNodeB) performs non-orthogonal multiplexing on downlink signals to a plurality of user terminals (UE: User Equipment) #1 and #2 to transmit. FIG. 1C illustrates the case where the user terminal #1 is positioned in a center portion (hereinafter, cell center portion) of a cell formed by the radio base station, and the user terminal #2 is positioned in an edge portion (hereinafter, cell edge portion) of the cell.

A path loss of the downlink signal to each of the user terminals #1 and #2 from the radio base station increases, as the distance from the radio base station increases. Therefore, a received SINR (Signal to Interference plus Noise Ratio) of the user terminal #2 relatively far from the radio base station is lower than a received SINR of the user terminal #1 relatively near the radio base station.

In NOMA, by varying transmit power corresponding to channel gain (e.g. received SINR, RSRP (Reference Signal Received Power)), path loss, propagation environment and the like, downlink signals of a plurality of user terminals are non-orthogonally multiplexed into the same radio resources. For example, in FIG. 1C, downlink signals to the user terminals #1 and #2 are multiplexed into the same radio resources with different transmit power. Relatively low transmit power is allocated to the downlink signal to the user terminal #1 with a high received SINR, and relatively high transmit power is allocated to the downlink signal to the user terminal #2 with a low received SINR.

Further, in NOMA, by removing an interference signal from a received signal with an interference canceller, a downlink signal to the terminal is extracted. In this case, among downlink signals non-orthogonally multiplexed into the same radio resources, the interference signal is a downlink signal to another terminal with higher transmit power than that of the terminal. Therefore, by removing the downlink signal to another terminal with higher transmit power than that of the terminal with the interference canceller, the downlink signal to the terminal is extracted.

For example, the downlink signal to the user terminal #2 is transmitted with higher transmit power than that of the downlink signal to the user terminal #1. Therefore, the user terminal #1 positioned in the cell center portion receives the downlink signal to the user terminal #2 non-orthogonally multiplexed into the same radio resources as the interference signal, in addition to the downlink to the terminal #1. The user terminal #1 removes the downlink signal to the user terminal #2 with the interference canceller, and is thereby capable of extracting the downlink signal to the terminal #1 to properly decode.

On the other hand, the downlink signal to the user terminal #1 is transmitted with lower transmit power than that of the downlink signal to the user terminal #2. Therefore, in the user terminal #2 in the cell edge portion, since the effect of interference by the downlink signal to the user terminal #1 non-orthogonally multiplexed into the same radio resource is relatively small, the terminal #2 is capable of extracting the downlink signal to the terminal #2 to properly decode, without performing interference cancellation with the interference canceller.

Herein, as the interference canceller used in the user terminal #1 in the cell center portion, for example, considered are CWIC (Code Word level Interference Canceller) and R-ML (Reduced complexity-Maximum Likelihood detector). The CWIC is a successive interference canceller (SIC: Successive Interference Cancellation) type, and is also called turbo SIC and the like.

In the case of using the CWIC, the user terminal #1 performs processing up to turbo decoding on the downlink signal (interference signal) to the user terminal #2. The user terminal #1 generates a replica signal of interference based on the turbo decoding result and channel estimation result, subtracts the generated replica signal from the received signal, and extracts the downlink signal to the user terminal #1. On the other hand, in the case of using the R-ML, the user terminal #1 does not perform turbo decoding on the downlink signal (interference signal) to the user terminal #2, and performs maximum likelihood detection concurrently on downlink signals to both of the user terminals #1 and #2.

Further, the CWIC is applicable to the case of multiplying the downlink signals to the user terminals #1 and #2 by respective different precoding matrixes. On the other hand, in the R-ML, in the case of applying respective different precoding matrixes to the downlink signals of the user terminals #1 and #2, since spatial versatility in the terminal lacks, there is the risk that characteristics deteriorate.

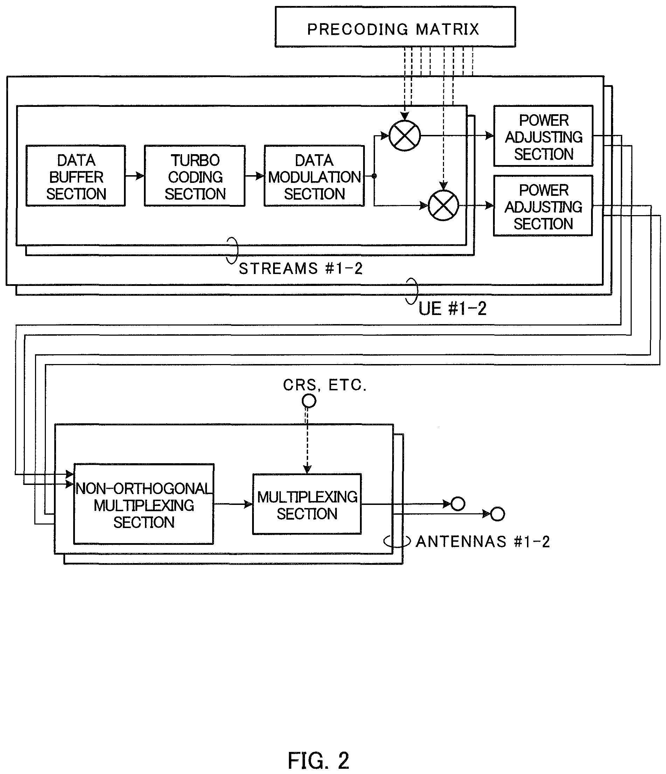

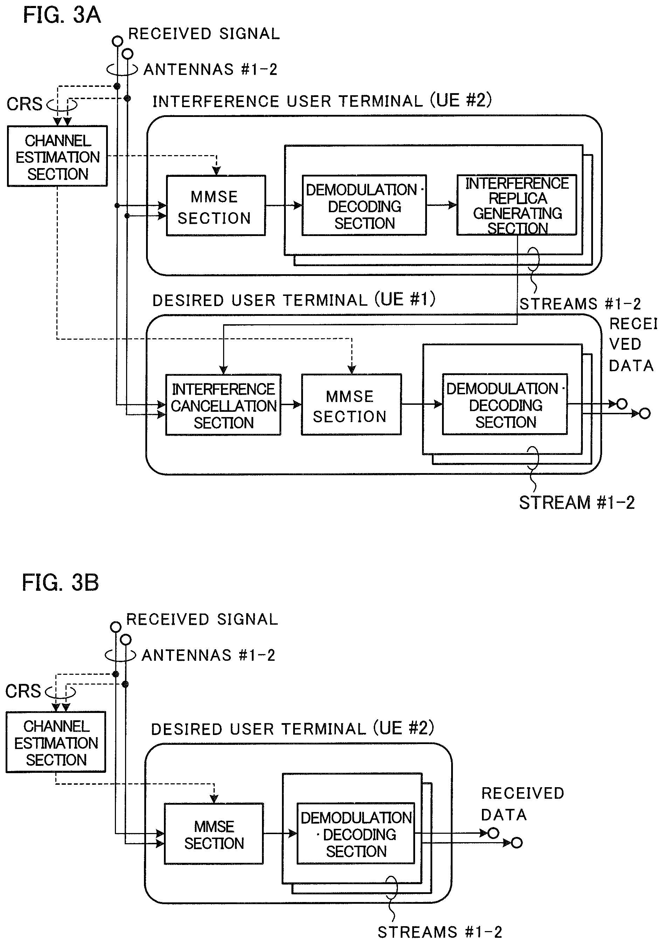

Referring to FIGs. 2 and 3, described is one example of configurations of the radio base station and user terminals #1 and #2 shown in FIG. 1C. FIG. 2 shows one example of the configuration of the radio base station (transmitter). In addition, FIG. 2 illustrates the configuration of 2x2 MIMO (Multiple-Input Multiple-Output), but the invention is not limited thereto. For example, the configuration of the radio base station (transmitter) may be a configuration of 4x4 MIMO, or a configuration other than MIMO. Further, FIG. 2 describes the configuration of the radio base station according to transmission processing, and the radio base station is assumed to be provided with necessary configurations as well as the configuration.

As shown in FIG. 2, for each of the user terminals #1 and #2, the radio base station performs coding (turbo coding) on data to streams #1 and #2 (Layers #1 and #2), modulates, and subsequently, multiplies by precoding matrixes. Then, the radio base station performs non-orthogonal multiplexing on modulated signals to the user terminals #1 and #2 subsequent to power adjustment to multiplex with a control signal, Cell specific Reference Signal (CRS) and the like. The station transmits the multiplexed signal as the downlink signal via a plurality of antennas #1 and #2.

FIG. 3 contains diagrams showing one example of configurations of user terminals (receivers) for receiving the downlink signal from the radio base station shown in FIG. 2. FIG. 3A shows one example of the configuration of the user terminal #1 in the cell center portion which performs interference cancellation, and FIG. 3B shows one example of the configuration of the user terminal #2 in the cell edge portion which does not perform cell cancellation.

In addition, each of FIGs. 3A and 3B describes the configuration of the user terminal according to reception processing, and the user terminal is assumed to be provided with necessary configurations as well as the configuration. Further, FIGs. 3A and 3B illustrate the configurations of the user terminals respectively in the cell center portion and the cell edge portion in a functional manner, and a single user terminal is capable of being provided with both configurations shown in FIGs. 3A and 3B.

Further, FIG. 3A illustrates the configuration using the SIC type interference canceller such as the CWIC, but the invention is not limited thereto, and a configuration using the R-ML as the interference canceller may be adopted. As shown in FIG. 3A, into the received signal in the user terminal #1 for performing interference cancellation are non-orthogonally multiplexed the downlink signal to the user terminal #1 (desired user terminal) and the downlink signal to the other user terminal #2 (interference user terminal).

The user terminal #1 estimates the downlink signal to the user terminal #2 to remove, and thereby extracts the downlink signal to the user terminal #1. Specifically, as shown in FIG. 3A, in a channel estimation section, the user terminal #1 performs channel estimation using the CRS multiplexed into the received signal. Then, in an MMSE (Minimum Mean Square Error) section, the terminal #1 obtains the downlink signal to the user terminal #2 by a least square method, based on the result (channel matrix) of channel estimation and the received signal. Further, the terminal #1 performs demodulation decoding (turbo decoding) on the downlink signal to the user terminal #2 to generate a replica signal (interference replica).

Using the replica signal of the user terminal #2, the user terminal #1 obtains the downlink signal to the user terminal #1. Specifically, the user terminal #1 subtracts the replica signal of the user terminal #2 from the received signal in an interference cancellation section to output to the MMSE section. Then, in the MMSE section, the user terminal #1 estimates the downlink signal of the user terminal #1 by the least square method, based on the above-mentioned result (channel matrix) of channel estimation and an output signal from the interference cancellation section. By demodulating and decoding the estimated signal, the user terminal #1 acquires data (received data) toward the user terminal #1.

On the other hand, as shown in FIG. 3B, the user terminal #2 in the cell edge portion obtains the downlink signal to the user terminal #2, without performing interference cancellation. Specifically, in a channel estimation section, the user terminal #2 performs channel estimation using the CRS multiplexed into the received signal. Then, in an MMSE section, the user terminal #2 estimates the downlink signal to the user terminal #2 by the least square method, based on the result (channel matrix) of channel estimation and the received signal. The user terminal #2 demodulates and decodes the estimated modulated signal, and thereby acquires data (received data) of the user terminal #2.

As described above, in the case of performing non-orthogonal multiplexing on downlink signals to a plurality of user terminals to transmit, it is expected that the radio base station controls the precoding matrix (PM) and Modulation Coding Scheme (MCS) applied to each downlink signal, based on feedback information from each user terminal. Such control based on the feedback information is also called closed loop control.

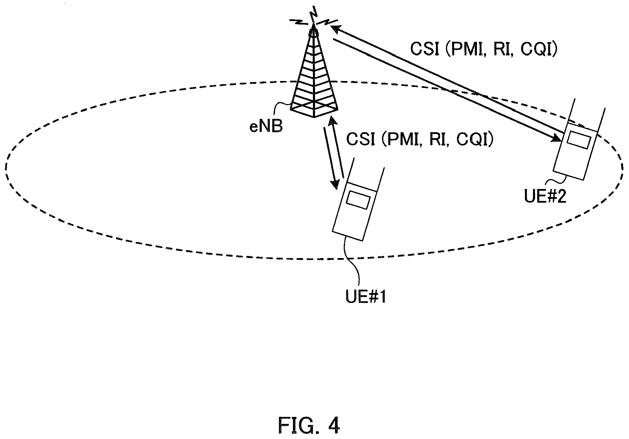

FIG. 4 is a schematic diagram of closed loop control. In addition, in FIG. 4, it is assumed that downlink signals to the user terminals #1 and #2 are subjected to non-orthogonal multiplexing. As shown in FIG. 4, each of the user terminals #1 and #2 transmits Channel State Information (CSI) to the radio base station as feedback. The CSI includes at least one of Precoding Matrix Indicator (PMI) to identify the precoding matrix, Rank Indicator (RI) to identify the rank (the number of layers), and Channel Quality Indicator (CQI) to identify the channel quality.

Specifically, in FIG. 4, each user terminal transmits a PMI indicative of an optimal precoding matrix, RI indicative of an optimal rank in the case of assuming the PMI, and CQI indicative of the channel quality in assuming the PMI and RI as feedback. In addition, each user terminal may select the PMI indicative of the optimal precoding matrix, from a codebook that associates the PMI and precoding matrix with each other. Further, the optimal PMI may be determined based on the propagation environment and the like.

Using the MCS associated with the CQI transmitted as feedback, the radio base station performs modulation coding on a downlink signal to each user terminal. Further, the radio base station multiplies the downlink signal to each user terminal by the precoding matrix indicated by the PMI transmitted as feedback. Furthermore, the radio base station transmits the downlink signal to each user terminal by the rank (the number of layers) indicated by the RI transmitted as feedback.

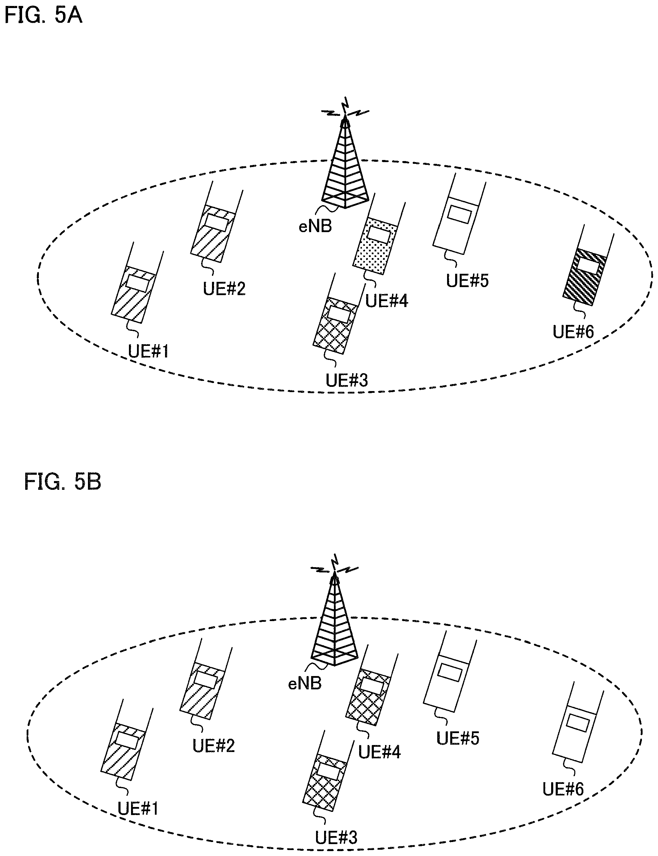

In addition, in NOMA, it is expected that gain increases, as the number of a plurality of user terminal (paring terminals) subjected to non-orthogonal multiplexing increases. FIG. 5 contains explanatory diagrams of the relationship between the number of paring terminals and gain of NOMA. FIG. 5A illustrates the case where a pair of paring terminals (user terminal #1 and #2) exists, and FIG. 5B illustrates the case where three pairs of paring terminals (user terminals #1 and #2, user terminals #3 and #4, user terminal #5 and #6) exist. In FIG. 5B, as compared with FIG. 5A, since the number of paring terminals increases in the same cell, gain of NOMA also increases.

Thus, as the number of paring terminals increases, gain of NOMA increases. Therefore, in order to increase the number of paring terminals, it is studied permitting application of different precoding matrixes between paring terminals. As shown in FIG. 4, when each user terminal transmits the optimal PMI as feedback, a common PMI is not always transmitted as feedback between user terminals. Therefore, when it is permitted performing non-orthogonal multiplexing on a plurality of user terminals having different PMIs (performing feedback), it is possible to increase the number of paring terminals.

However, in order to increase the number of paring terminals, in the case of permitting application of different precoding matrixes between paring terminals, as the interference canceller, it is necessary to use the CWIC. This is because in the case of permitting application of different precoding matrixes between paring terminals, as compared with the case of applying the same precoding matrix to paring terminals, it is assumed that characteristics of the R-ML significantly deteriorate by the lack of spatial versatility of the terminal.

On the other hand, as described above, in the CWIC, since it is necessary to perform up to turbo decoding also on the interference signal, as compared with the R-ML, it is assumed that the reception processing load generally increases. Therefore, from the viewpoint of reducing the reception processing load, it is not desirable to permit application of different precoding matrixes between paring terminals. From the viewpoint of reducing the reception processing load, in order to enable the R-ML to be used as the interference canceller, it is desired to apply the same precoding matrix to paring terminals.

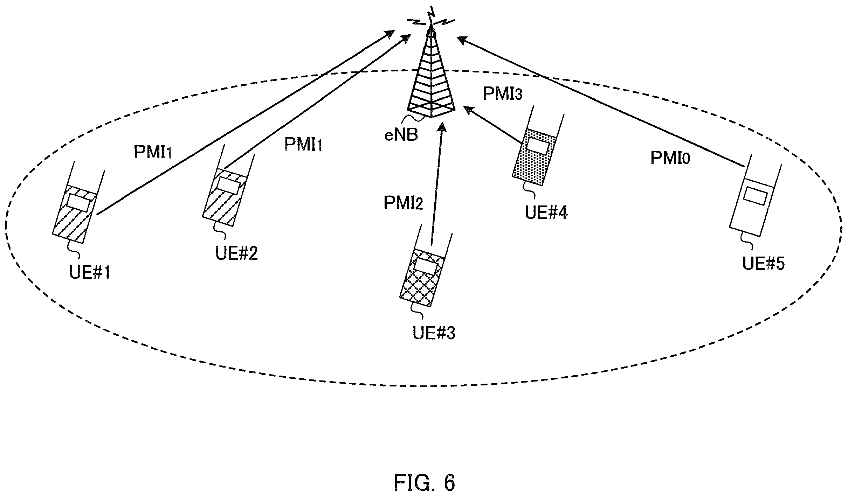

However, as shown in FIG. 4, in the case where each user terminal transmits an optimal PMI as feedback, when it is intended to apply the same precoding matrix to paring terminals, the number of paring terminals is limited. For example, in FIG. 6, it is possible to pair user terminals #1 and #2 that transmit the same PMI as feedback, but it is not possible to pair user terminals #3 to #5 that perform feedback of a PMI₂, PMI₃ and PMI₀, which are different from one another, respectively.

Herein, in order to increase the number of paring terminals while applying the same precoding matrix to paring terminals, it is also considered that the radio base station controls to apply a precoding matrix that is different from the PMI transmitted as feedback. For example, in FIG. 6, in order to pair at least two of the user terminals #3 to #5, it is considered that the radio base station applies a precoding matrix different from the PMIs transmitted from the user terminals #3 to #5 as feedback to the user terminal #3 to #5. However, also in this case, the radio base station is not capable of determining what precoding matrix should be applied to the user terminals #3 to #5.

As described above, in order to increase gain of NOMA, when the number of pairing terminals is increased by applying different precoding matrixes to paring terminals, the reception processing load increases. On the other hand, in order to reduce the reception processing load, when the same precoding matrix is applied to paring terminals, the number of paring terminals is limited, and it is not possible to efficiently obtain gain of NOMA.

Therefore, the inventors of present invention conceived increasing the number of paring terminals while applying the same precoding matrix to paring terminals, and thereby preventing the reception processing load from increasing while obtaining gain of NOMA. Specifically, the inventors of the invention found out the respect that each use terminal transmits a plurality of PMIs as feedback, a plurality of user terminals that transmits a common PMI as feedback is paired, and that it is thereby possible to increase the number of paring terminals, while applying the same precoding matrix to paring terminals.

One Embodiment of the present invention will be described below in detail. In this Embodiment, as one example, it is assumed that a user terminal receives a downlink signal using the NOMA scheme, but the invention is not limited thereto. As long as the downlink signal received in the user terminal is a downlink signal multiplexed (e.g. power-multiplexed) into the same radio resource as that of a downlink signal to another user terminal, the downlink signal may be any signal. Further, in the following description, it is assumed that the downlink signal using the NOMA scheme is a signal such that an OFDMA signal is subjected to non-orthogonal multiplexing in the power domain, but the invention is not limited thereto. The downlink signal subjected to non-orthogonal multiplexing by the NOMA scheme is not limited to the OFDMA signal, and may be any signal multiplexed in at least one of the frequency domain (f), time domain (t) and code domain.

Further, in the following description, transmission modes (TMs) (e.g. transmission modes 2-6) are assumed where data demodulation is performed using the CRS, but the invention is not limited thereto. This Embodiment is applicable to transmission modes (e.g. transmission modes 7-9) where data demodulation is performed using a demodulation reference signal (DMRS: DeMudulation Reference Signal), and a transmission mode (e.g. transmission mode 10) where a downlink signal is received from a plurality of radio base stations using Coordinated Multipoint (CoMP).

Furthermore, in the following description, it is assumed that interference measurement (also referred to as measurement of channel state, propagation environment or the like) in the user terminal is performed based on the CRS, but the invention is not limited thereto. Interference measurement may be performed based on a Channel State Information-Reference Signal (CSI-RS). In addition, in the case of using the CRS, as compared with the case of using the CSI-RS such as the transmission mode 10, there is the merit in the respect that it is not necessary to beforehand notify of information (CSI-RS/IM) indicative of resources to measure by higher layer signaling.

Still furthermore, in this Embodiment, from the viewpoint of reducing the reception processing load, it is suitable to use the R-ML as the interference canceller, but the invention is not limited thereto, and it is also possible to apply the SIC type interference canceller such as the CWIC. Moreover, in this Embodiment, it is assumed that the number of a plurality of user terminals (paring terminals) non-orthogonally multiplexed into the same radio resources is "2", but the invention is not limited thereto, and three or more user terminals may be grouped to non-orthogonally multiplex into the same radio resources.

### (Radio communication method)

In radio communication methods according to this Embodiment, a user terminal transmits a plurality of PMIs to a radio base station, is subjected to non-orthogonal multiplexing with a downlink signal to another user terminal determined based on the plurality of PMIs, and receives a downlink signal multiplied by the same precoding matrix as that of the downlink signal to the another user terminal from the radio base station.

Herein, the above-mentioned plurality of PMIs may be the best PMI and second best PMI. In addition, for example, the best and second best PMIs are determined corresponding to the propagation environment of the user terminal. Further, the above-mentioned plurality of PMIs is not limited to the best and second best PMIs, and for example, may be PMIs of from the best to an nth (n≥2) best. In this case, n may be indicated by higher layer signaling.

Further, the above-mentioned plurality of PMIs may be indicated by higher layer signaling. In this case, the radio base station may indicate a plurality of PMIs to the user terminal using a bitmap. This bitmap may be a bitmap (also called code Book Subset Restriction) equal to the number of PMIs defined in the codebook, and "1" may be set on a bit indicative of a PMI which the terminal is instructed to transmit. The user terminal transmits the PMI indicated by the bitmap to the radio base station.

Furthermore, the user terminal may transmit a plurality of CQIs that respectively corresponds to the above-mentioned plurality of PMIs, in addition to the above-mentioned plurality of PMIs. As a matter of course, the plurality of CQIs may be a CQI that corresponds to the best PMI and a CQI that corresponds to the second best PMI, or may be CQIs that respectively correspond to PMIs of from the best to an nth (n≥2) best. In this case, n may be indicated by higher layer signaling. Further, the plurality of CQIs may be CQIs that correspond to PMIs indicated by higher layer signaling.

Still furthermore, in addition to the above-mentioned plurality of PMIs, the user terminal may transmit a plurality of RIs that respectively corresponds to the above-mentioned plurality of PMIs, or may transmit a single RI common to the above-mentioned plurality of PMIs. Alternatively, without transmitting the plurality of RIs, the user terminal may transmit only the above-mentioned plurality of PMIs, or may transmit only the above-mentioned plurality of PMIs and the above-mentioned plurality of CQIs. This is because it is expected that feedback of the RI is indicated to be generally a longer cycle than that of feedback of the PMI by higher layer signaling, and the common value is available within the cycle, without transmitting the RI.

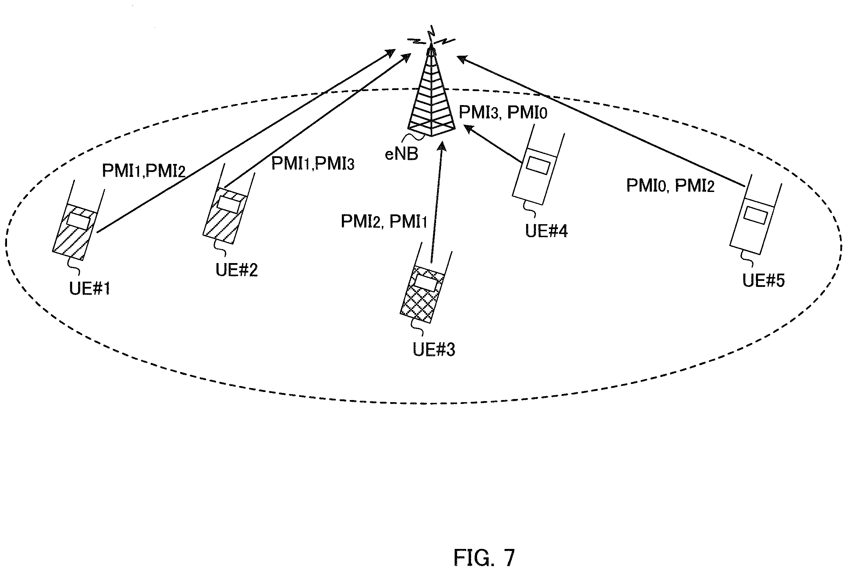

FIG. 7 is a conceptual diagram of the radio communication method according to this Embodiment. In addition, FIG. 7 explains the example where each user terminal transmits the best and second best PMIs as a plurality of PMIs, and as described above, a plurality of PMIs is not limited the best and second best PMIs. Further, being not shown in FIG. 7, each user terminal may transmit a plurality of CQIs that corresponds to a plurality of PMIs. Similarly, each user terminal may transmit a plurality of or a single RI that corresponds to a plurality of PMIs. Furthermore, PMI₀ to PMI₃ shown in FIG. 7 are only illustrative, and the number of PMIs is not limited thereto.

In FIG. 7, the user terminal #1 transmits the best PMI₁ and second best PMI₂, and the user terminal #2 transmits the best PMI₁ and second best PMI₃. Similarly, the user terminal #3 transmits the best PMI₂ and second best PMI₁, the user terminal #4 transmits the best PMI₃ and second best PMI₀, and the user terminal #5 transmits the best PMI₀ and second best PMI₂.

Based on a plurality of PMIs respectively transmitted from the user terminals #1 to #5 as feedback, the radio base station determines a plurality of user terminals (paring terminals) non-orthogonally multiplexed into the same radio resources. Specifically, since the best PMI₁ of the user terminals #1 and #2 is the same, the radio base station pairs the user terminals #1 and #2. Further, since the second best PMI₀ of the user terminal #4 and the best PMI₀ of the user terminal #5 are the same, the radio base station pairs the user terminals #4 and #5.

As shown in FIG. 7, when each user terminal transmits a plurality of PMIs as feedback, as well as the user terminals #1 and #2 where the best PMI is the same, the radio base station is capable of paring user terminals #4 and #5 where the best PMIs are different. Therefore, as compared with the case (FIG. 6) where each user terminal transmits only the best PMI as feedback, it is possible to increase the number of paring terminals.

Thus, in the case where each user terminal transmits a plurality of PMIs as feedback, it is possible to increase the number of user terminals having the common PMI. Therefore, while applying the same precoding matrix to paring terminals, it is possible to increase the number of paring terminals. As a result, in the case of transmitting downlink signals using the NOMA scheme, it is possible to reduce the reception processing load, while efficiently obtaining gain of NOMA.

### (Transmission Aspect)

Described next are transmission Aspects of a plurality of pieces of CSI in the radio communication method according to this Embodiment. A plurality of pieces of CSI transmitted in the following Aspects 1 to 3 may be the plurality of PMIs as described above, may be the plurality of PMIs and the plurality of CQIs as described above, or may be the plurality of PMIs, the plurality of CQIs and the plurality of/single RI as described above, and these indicators are assumed to be collectively called.

### <Aspect 1>

In Aspect 1, the user terminal transmits a plurality of pieces of CSI with a Periodic CSI Report to report the CSI at predetermined intervals. Specifically, the user terminal periodically transmits a plurality of pieces of CSI in respective different subframes.

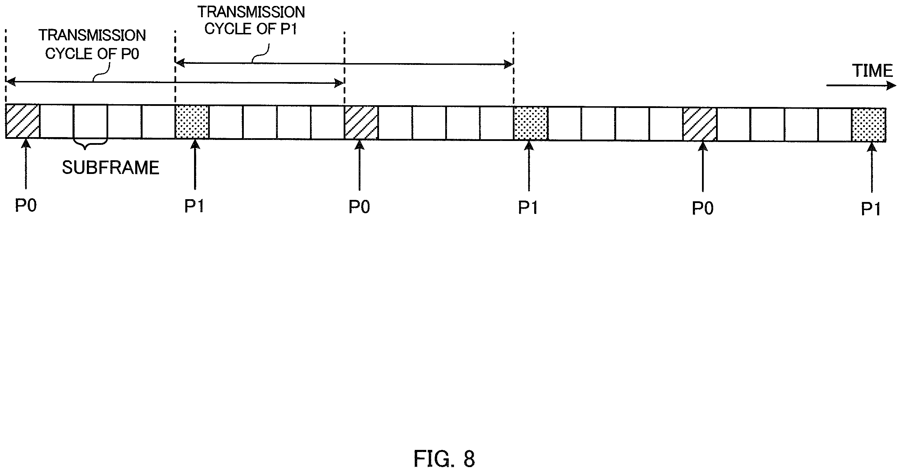

FIG. 8 is an explanatory diagram of one example of transmission of a plurality of PMIs according to Aspect 1. FIG. 8 illustrates the example where the user terminal transmits a plurality of PMIs as a plurality of pieces of CSI, but the invention is not limited thereto. As described above, in addition to a plurality of PMIs, a plurality of CQIs may be transmitted, or a plurality of CQIs and a plurality of/single RI may be transmitted. Further, in FIG. 8, it is assumed that the first PMI (P0) represents the best PMI, and the second PMI (P1) represents the second best PMI, but as described above, a plurality of PMIs is not limited to the best and second best PMIs.

As shown in FIG. 8, the user terminal allocates a plurality of PMIs (P0, PI) to uplink control channels (PUCCH: Physical Uplink Control Channel) of respective different subframes to transmit at predetermined intervals. In addition, as transmission of these PMIs, it is possible to use PUCCH format 2/2A/2B and the like. Further, when an uplink shared channel (PUSCH: Physical Uplink Shared Channel) is allocated to the transmission subframe of each PMI, the PMI may be transmitted using the PUSCH.

Further, in FIG. 8, the transmission subframe of each PMI (P0, PI) may be identified by a transmission cycle and offset with respect to the beginning of a radio frame notified to the user terminal from the radio base station by higher layer signaling. The transmission cycles of the first and second PMIs may be the same or may be different from each other. For example, the transmission cycle of the first PMI (best PMI) may be set to be shorter than the transmission cycle of the second PMI (second best PMI).

In addition, in Aspect 1, the number of a plurality of pieces of CSI to periodically transmit in different subframes may be notified from the radio base station to the user terminal by higher layer signaling (e.g. RRC signaling), or may be notified dynamically. For example, dynamic notification may be performed by a downlink control channel (PDCCH: Physical Downlink Control Channel).

### <Aspect 2>

In Aspect 2, the user terminal transmits a plurality of pieces of CSI instructed from the radio base station by higher layer signaling (e.g. RRC signaling).

As described above, the radio base station may indicate a plurality of PMIs using the bitmap. This bitmap may be the bitmap (also called code Book Subset Restriction) equal to the number of PMIs defined in the codebook. The user terminal transmits the PMI indicated by the bitmap to the radio base station. Further, in addition to the PMI, the user terminal may transmit at least one of the CQI that corresponds to the PMI and the RI that corresponds to the PMI.

In addition, the radio base station is capable of instructing the user terminal to transmit a single PMI. In addition, from the viewpoint of increasing the paring terminals, the radio station is desirable to instruct the terminal to transmit a plurality of PMIs. Further, Aspect 2 is capable of being combined with Aspect 1, and the user terminal may periodically transmit a plurality of pieces of CSI indicated from the radio base station in respective different subframes.

### <Aspect 3>

In Aspect 3, the user terminal transmits a plurality of pieces of CSI with an Aperiodic CSI Report. In the Aperiodic CSI Report, the user terminal receives downlink control information (DCI: also referred to as uplink scheduling grant) including a CSI request field (CQI request field, or also simply referred to as request field) via the PDCCH. When a value of the CSI request field indicates a transmission instruction (e.g. the value is "1"), the user terminal transmits a plurality of pieces of CSI using the PUSCH assigned by the DCI.

In addition, when the value of the above-mentioned CSI request filed indicates the transmission instruction, as a plurality of pieces of CSI, the user terminal may transmit a plurality of PMIs, or may transmit a plurality of CQIs, or a plurality of CQIs and a plurality of/single RI, in addition to the plurality of PMIs.

Further, the user terminal may transmit the best CSI and second best CSI as a plurality of pieces of CSI, or may transmit pieces of CSI of from the best to an nth (n≥2) best. Furthermore, it is possible to combine Aspect 3 with Aspect 2, and when the value of the above-mentioned CSI request field indicates the transmission instruction, the user terminal may transmit a plurality of pieces of CSI indicated by higher layer signaling.

Moreover, the number of a plurality of pieces of CSI may be notified from the radio base station to the user terminal by higher layer signaling (e.g. RRC signaling), or may be notified dynamically by the PDCCH.

In addition, in Aspect 3, since it is essential only to indicate whether or not to transmit the CSI by the above-mentioned CSI request field, the CSI request filed may be 1 bit. However, the invention is not limited thereto, and the above-mentioned CSI request field may be 2 bits, or may be 3 bits or more.

### <Aspect 4>

In Aspect 4, the user terminal dynamically controls the CSI transmitted by the Aperiodic CSI Report described above. Specifically, the user terminal receives the DCI including the CSI request field using the PDCCH, and further, receives instruction information indicating which PMI is required by the value of the CSI request field, by higher layer signaling. Using the PUSCH indicated by the above-mentioned DCI, the user terminal transmits the PMI determined based on the value of the CSI request filed and the above-mentioned instruction information.

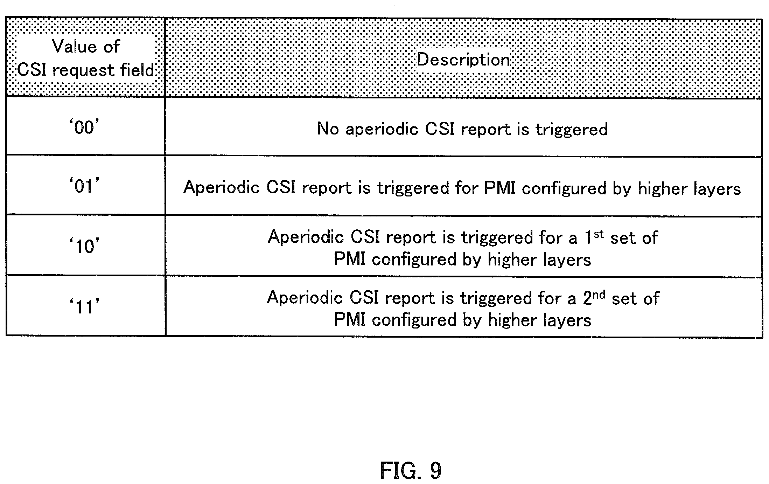

FIG. 9 is a diagram showing one example of CSI request fields according to Aspect 4. For example, in FIG. 9, when the value of the CSI request field is "00", the terminal is instructed not to transmit the CSI, and when the value is "01", is instructed to transmit the PMI notified by higher layer signaling. Further, when the value is "10" or "11", the terminal is instructed to transmit a first combination (first set) of PMIs or a second combination (second set) of PMIs notified by higher layer signaling, respectively.

For example, as the instruction information, the radio base station notifies the user terminal, by higher layer signaling, of information indicative of being instructed not to transmit the PMI by the value "00" of the CSI request field, information indicative of being instructed to transmit PMI₀ by the value "01" of the CSI request field, information indicative of being instructed to transmit PMI₀ and PMI₂ by the value "10" of the CSI request field, and information indicative of being instructed to transmit PMI₁ and PMI₃ by the value "11" of the CSI request field.

In addition, as the above-mentioned instruction information, bitmaps such as code Book Subset Restriction may be used. In the bitmap, "1" may be set on a bit indicative of a PMI which the terminal is instructed to transmit.

When the user terminal receives the DCI including the CSI request field, referring to the above-mentioned instruction information subjected to higher layer signaling, the user terminal transmits the PMI indicated by the value of the CSI request field. For example, when the user terminal receives the DCI including the CSI request field with the value of "01", the terminal transmits PMI₀. Further, when the user terminal receives the DCI including the CSI request field with the value of "10", the terminal transmits PMI₀ and PMI₂ as the first set. Furthermore, when the user terminal receives the DCI including the CSI request field with the value of "11", the terminal transmits PMI₁ and PMI₃ as the second set.

Moreover, in addition to the PMI indicated by the value of the above-mentioned CSI request field, the terminal may transmit a CQI that corresponds to the PMI, may transmit an RI that corresponds to the PMI, or may transmit the CQI and RI that correspond to the PMI.

In Aspect 4, by varying the value of the CSI request field, it is possible to dynamically control the PMI transmitted from the user terminal. Further, by beforehand notifying that the terminal is instructed to transmit which PMI by a value of the CSI request field by higher layer signaling, it is possible to control the combination of PMIs transmitted from the user terminal.

In addition, in FIG. 9, as the above-mentioned instruction information, the information to instruct the terminal to transmit which PMI by values "00", "01", "10" and "11" of the CSI request field is subjected to higher layer signaling, but the invention is not limited thereto. It may be determined fixedly that the terminal is instructed to transmit which PMI by values "00", "01", "10" and "11" of the CSI request field. For example, in FIG. 9, the user terminal may be instructed to transmit the best PMI by the value "00" of the CSI request field, transmit the best and second best PMIs by the value "10", and transmit the best and third best PMIs by the value "11".

### (Radio communication system)

A configuration of a radio communication system according to one Embodiment of the present invention will be described below. In the radio communication system, the radio communication methods according to the above-mentioned Embodiment of the invention are applied. In addition, the above-mentioned radio communication methods may be applied alone, or may be applied in combination thereof. In addition, the same component is assigned with the same reference numeral to omit redundant descriptions.

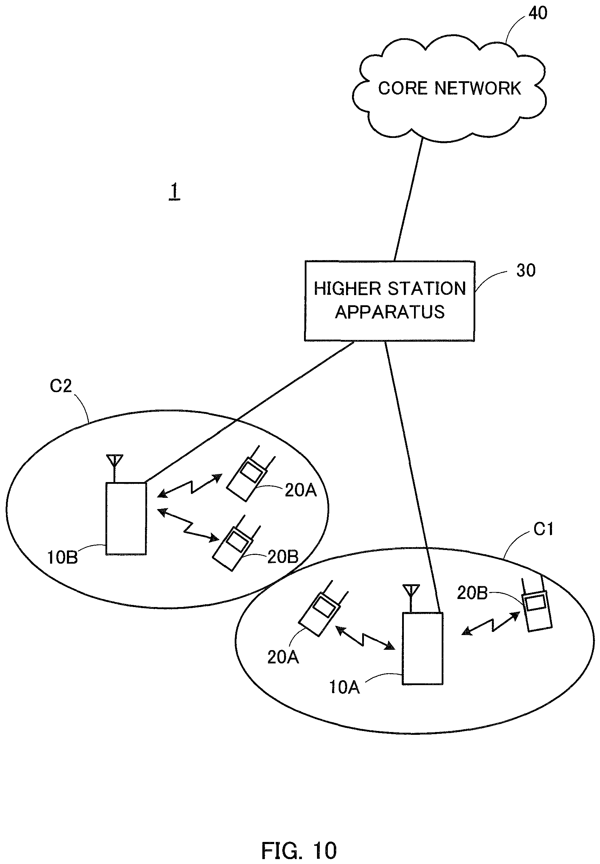

FIG. 10 is a diagram showing one example of a schematic configuration of the radio communication system according to one Embodiment of the present invention. In addition, the radio communication system 1 may be called SUPER 3G, LTE-A (LTE-Advanced), IMT-Advanced, 4G, 5G, FRA (Future Radio Access) and the like.

The radio communication system 1 shown in FIG. 10 includes radio base stations 10 (10A, 10B), and a plurality of user terminals 20 (20A, 20B) that communicate with the radio base station 10. The radio base stations 10 are connected to a higher station apparatus 30, and are connected to a core network 40 via the higher station apparatus 30. Each user terminal 20 is capable of communicating with the radio base stations 10 in cells C1, C2, respectively. In addition, for example, the higher station apparatus 30 includes an access gateway apparatus, Radio Network Controller (RNC), Mobility Management Entity (MME) and the like, but is not limited thereto. Further, the radio base stations 10 may be subjected to wired connection (optical fiber, X2 interface and the like) or wireless connection.

In addition, the radio base station 10 may be a macro base station, collection node, eNodeB (eNB), transmission/reception point and the like for forming a macro cell, or may be a small base station, micro-base station, pico-base station, femto-base station, Home eNodeB (HeNB), RRH (Remote Radio Head), transmission/reception point and the like for forming a small cell. Each user terminal 20 is a terminal supporting various communication schemes such as LTE and LTE-A, and may include a fixed communication terminal, as well as the mobile communication terminal.

In the radio communication system 1, as radio access schemes, NOMA (Non-Orthogonal Multiple Access) is applied on downlink, and SC-FDMA (Single Carrier Frequency Division Multiple Access) is applied on uplink. Further, OFDMA (Orthogonal Frequency Division Multiple Access) may be applied on downlink. Furthermore, NOMA and OFDMA may be combined on downlink. In addition, uplink and downlink radio access schemes are not limited to the combination of the schemes.

NOMA is a multicarrier transmission scheme for dividing a frequency band into a plurality of narrow frequency bands (subcarriers, sub-bands or the like), and performing non-orthogonal multiplexing on signals of user terminals 20 with different transmit power for each sub-band, and OFDMA is a multicarrier transmission scheme for dividing a frequency band into a plurality of sub-bands, and performing orthogonal multiplexing on signals of user terminals 20 for each sub-band to perform communication. SC-FDMA is a single-carrier transmission scheme for dividing a system bandwidth into bands comprised of a single or contiguous resource blocks for each terminal so that a plurality of user terminals 20 uses mutually different bands, and thereby reducing interference among user terminals. In addition, NOMA and OFDMA may be used in a wideband.

Described herein are communication channels used in the radio communication system 1. The downlink communication channels include a downlink shared data channel (PDSCH: Physical Downlink Shared Channel) shared by user terminals 20, broadcast channel (PBCH: Physical Broadcast Channel), downlink L1/L2 control channels (PDCCH, EPDCCH, PCFICH, PHICH, etc.) and the like. User data, higher layer control information, SIB (System Information Block) and the like are transmitted on the PDSCH. Further, MIB (Master Information Block) is transmitted on the PBCH.

The downlink control information (DCI) including scheduling information of the PDSCH and PUSCH is transmitted on the PDCCH (Physical Downlink Control Chanel). The EPDCCH is frequency division multiplexed with the PDSCH (downlink shared data channel) to be used in transmitting the DCI and the like as the PDCCH. The number of OFDM symbols used in the PDCCH is transmitted on the PCFICH (Physical Control Format Indicator Channel). A receipt confirmation signal (e.g. ACK/NACK) of HARQ (Hybrid ARQ) for the PUSCH is transmitted on the PHICH (Physical Hybrid-ARQ Indicator Channel).

Further, the uplink communication channels include the uplink shared channel (PUSCH: Physical Uplink Shared Channel) shared by user terminals 20, uplink control channel (PUCCH: Physical Uplink Control Channel), random access channel (PRACH: Physical Random Access Channel) and the like. User data and higher layer control information is transmitted on the PUSCH. Further, radio quality information (CQI: Channel Quality Indicator) of downlink, receipt conformation signal and the like are transmitted on the PUCCH. A random access preamble to establish connection with the cell is transmitted on the PRACH.

### (Radio base station)

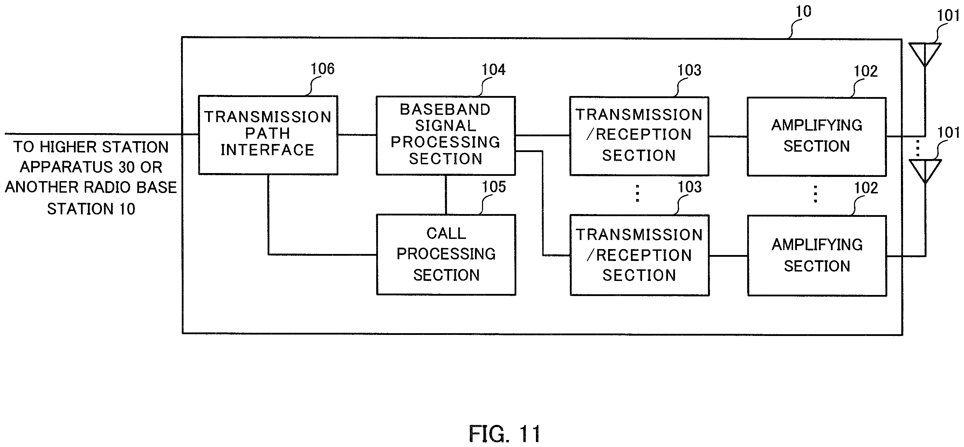

FIG. 11 is a diagram showing one example of an entire configuration of the radio base station according to one Embodiment of the present invention. The radio base station 10 is provided with a plurality of transmission/reception antennas 101, amplifying sections 102, transmission/reception sections 103, baseband signal processing section 104, call processing section 105, and transmission path interface 106. In addition, with respect to each of the transmission/reception antenna 101, amplifying section 102, and transmission/reception section 103, the radio base station is essentially configured to include at least one or more.

User data to transmit to the user terminal 20 from the radio base station 10 on downlink is input to the baseband signal processing section 104 from the higher station apparatus 30 via the transmission path interface 106.

The baseband signal processing section 104 performs, on the user data, transmission processing such as processing of PDCP (Packet Data Convergence Protocol) layer, segmentation and concatenation of the user data, transmission processing of RLC (Radio Link Control) layer such as RLC retransmission control, MAC (Medium Access Control) retransmission control (e.g. transmission processing of HARQ (Hybrid Automatic Repeat reQuest)), scheduling, transmission format selection, channel coding, Inverse Fast Fourier Transform (IFFT) processing, and precoding processing to transfer to the transmission/reception sections 103. Further, also concerning a downlink control signal, the section 104 performs transmission processing such as channel coding and Inverse Fast Fourier Transform on the signal to transfer to the transmission/reception sections 103.

Each of the transmission/reception sections 103 converts the baseband signal, which is subjected to precoding (multiplied by a precoding matrix) for each antenna and is output from the baseband signal processing section 104, into a signal with a radio frequency band to transmit. The radio-frequency signal subjected to frequency conversion in the transmission/reception section 103 is amplified in the amplifying section 102, and is transmitted from the transmission/reception antenna 101. The transmission/reception section 103 is capable of being comprised of a transmitter/receiver, transmission/reception circuit or transmission/reception apparatus explained based on common recognition in the technical field according to the present invention. In addition, the transmission/reception section 103 may be comprised as an integrated transmission/reception section, or may be comprised of a transmission section and reception section.

The transmission/reception section 103 receives a plurality of pieces of CSI from the user terminal 20. Specifically, the transmission/reception section 103 may receive a plurality of PMIs as a plurality of pieces of CSI from the user terminal 20. Alternatively, in addition to a plurality of PMIs, the transmission/reception section 103 may receive a plurality of CQIs that respectively corresponds to the plurality of PMIs from the user terminal 20. Alternatively, in addition to the above-mentioned plurality of PMIs, the transmission/reception section 103 may receive a plurality of or a single RI that corresponds to the above-mentioned plurality of PMIs from the user terminal 20. Alternatively, the transmission/reception section 103 may receive the above-mentioned plurality of PMIs, the above-mentioned plurality of CQIs, and the above-mentioned plurality of or single RI.

Further, the transmission/reception section 103 may transmit higher layer control information subjected to higher layer signaling to the user terminal 20. The higher layer control information may include the instruction information indicating a plurality of PMIs for the user terminal 20 to transmit and the number of the plurality of PMIs. Further, the higher layer control information may include the instruction information indicating which PMI is required by the value of the CSI request field.

Furthermore, the transmission/reception section 103 may transmit the DCI including the CSI request field on the PDCCH.

On the other hand, for uplink signals, radio-frequency signals received in the transmission/reception antennas 101 are amplified in the amplifying sections 102. The transmission/reception section 103 receives the uplink signal amplified in the amplifying section 102. The transmission/reception section 103 performs frequency conversion on the received signal into a baseband signal to output to the baseband signal processing section 104.

For user data included in the input uplink signal, the baseband signal processing section 104 performs Fast Fourier Transform (FFT) processing, Inverse Discrete Fourier Transform (IDFT) processing, error correcting decoding, reception processing of MAC retransmission control, and reception processing of RLC layer and PDCP layer to transfer to the higher station apparatus 30 via the transmission path interface 106. The call processing section 105 performs call processing such as setting and release of a communication channel, state management of the radio base station 10, and management of radio resources.

The transmission path interface 106 transmits and receives signals to/from the higher station apparatus 30 via a predetermined interface. Further, the transmission path interface 106 may transmit and receive signals (backhaul signaling) to/from an adjacent radio base station 10 via an inter-base station interface (e.g. optical fiber in conformity with CPRI (Common Public Radio Interface), X2 interface).

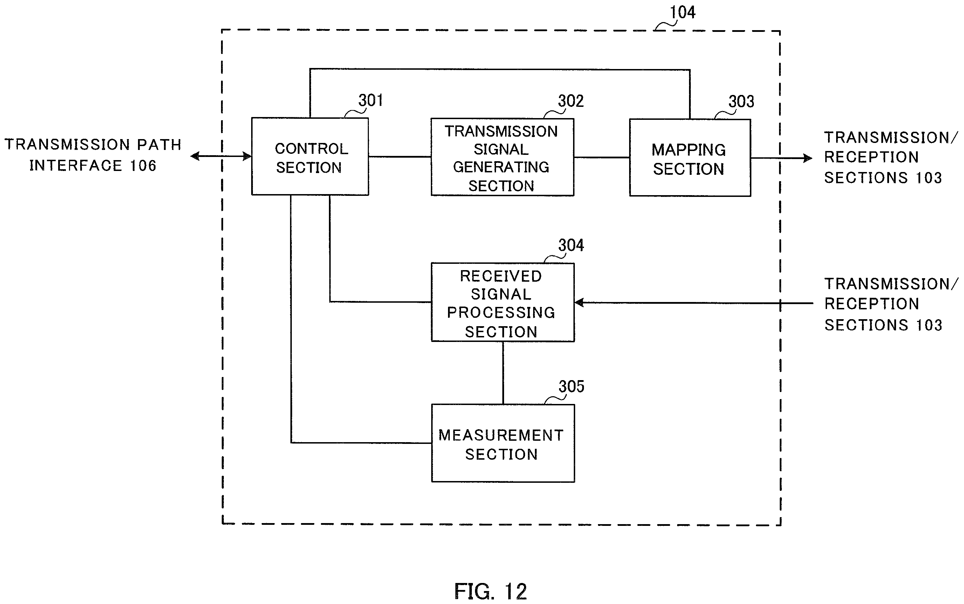

FIG. 12 is a diagram showing one example of a function configuration of the radio base station according to one Embodiment of the present invention. In addition, FIG. 12 mainly illustrates function blocks of a characteristic portion according to one Embodiment of the invention, and the radio base station 10 is assumed to have other function blocks required for radio communication. As shown in FIG. 12, the baseband signal processing section 104 is provided with a control section (scheduler) 301, transmission signal generating section 302, mapping section 303, received signal processing section 304, and measurement section 305.

The control section (scheduler) 301 performs control of the entire radio base station 10. The control section 301 is capable of being comprised of a controller, control circuit or control apparatus explained based on the common recognition in the technical field according to the present invention.

For example, the control section 301 controls generation of signals by the transmission signal generating section 302, and assignment of signals by the mapping section 303. Further, the control section 301 controls reception processing of signals by the received signal processing section 304, and measurement of signals by the measurement section 305.

The control section 301 controls scheduling (e.g. resource allocation) of system information, a downlink data signal transmitted on the PDSCH and downlink control signal transmitted on the PDCCH and/or EPDCCH. Further, the control section 301 controls scheduling of a synchronization signal and downlink reference signals such as the CRS, CSI-RS and DMRS.

Further, the control section 301 controls scheduling of an uplink data signal transmitted on the PUSCH, uplink control signal (e.g. receipt conformation signal (HARQ-ACK)) transmitted on the PUCCH and/or the PUSCH, random access preamble transmitted on the PRACH, uplink reference signal and the like.

Based on a plurality of PMIs transmitted from each user terminal 20 as feedback, the control section 301 determines a plurality of user terminals (paring terminals) of which downlink signals are non-orthogonally multiplexed. Specifically, the control section 301 determines to perform non-orthogonal multiplexing on a plurality of user terminals that transmits a common PMI as feedback.

Further, the control section 301 controls the transmission signal generating section 302 to multiply each of the downlink signals to the above-mentioned plurality of user terminals (paring terminals) by the same precoding matrix. Specifically, the control section 301 controls the transmission signal generating section 302 to multiply each of the downlink signals to the above-mentioned paring terminals by a precoding matrix indicated by the PMI common to the paring terminals. Further, the control section 301 may detect the precoding matrix indicated by the PMI, by referring to a codebook not shown.

Furthermore, the control section 301 controls power of downlink signals so that the downlink signals to the above-mentioned plurality of user terminals (paring terminals) properly undergo non-orthogonal multiplexing (power multiplexing).

Still furthermore, based on the CQI transmitted from each user terminal 20 as feedback, the control section 301 controls the MCS applied to the downlink signal to each user terminal 20. Moreover, based on the RI transmitted from each user terminal 20 as feedback, the control section 301 controls the rank (the number of layers) applied to the downlink signal to each user terminal 20.

Based on instructions from the control section 301, the transmission signal generating section 302 generates downlink signals to output to the mapping section 303. The transmission signal generating section 302 is capable of being comprised of a signal generator, signal generating circuit or signal generating apparatus explained based on the common recognition in the technical field according to the present invention. Further, the transmission signal generating section 302 is capable of actualizing the data buffer section, turbo coding section, data modulation section, multiplying section, power adjusting section, non-orthogonal multiplexing section and the like in FIG. 2.

The transmission signal generating section 302 performs modulation coding on the downlink signal to each user terminal 20 with the MCS determined by the control section 301. Further, the transmission signal generating section 302 multiplies each of the downlink signals to the paring terminals by the control section 301 by the same precoding matrix. Furthermore, the transmission signal generating section 302 performs non-orthogonal (power multiplexing) on the downlink signals to the paring terminals determined by the control section 301 to output to the mapping section 303.

Based on instructions from the control section 301, the mapping section 303 maps the downlink signal generated in the transmission signal generating section 302 to predetermined radio resources to output to the transmission/reception section 103. The mapping section 303 is capable of being comprised of a mapper, mapping circuit or mapping apparatus explained based on the common recognition in the technical field according to the present invention. The mapping section 303 is capable of actualizing the multiplexing section in FIG. 3.

The received signal processing section 304 performs reception processing (e.g. demapping, demodulation, decoding and the like) on the received signal input from the transmission/reception section 103. Herein, for example, the received signal is an uplink signal (uplink control signal, uplink data signal) transmitted from the user terminal 20. The received signal processing section 304 is capable of being comprised of a signal processor, signal processing circuit or signal processing apparatus explained based on the common recognition in the technical field according to the present invention.

The received signal processing section 304 outputs information decoded by the reception processing to the control section 301. Further, the received signal processing section 304 outputs the received signal and signal subjected to the reception processing to the measurement section 305.

The measurement section 305 performs measurement on the received signal. The measurement section 305 is capable of being comprised of a measurement device, measurement circuit or measurement apparatus explained based on the common recognition in the technical field according to the present invention.

For example, the measurement section 305 may measure received power (e.g. RSRP (Reference Signal Received Power)), received quality (e.g. RSRQ (Reference Signal Received Quality)), channel state and the like of the received signal. The measurement result may be output to the control section 301.

### (User terminal)

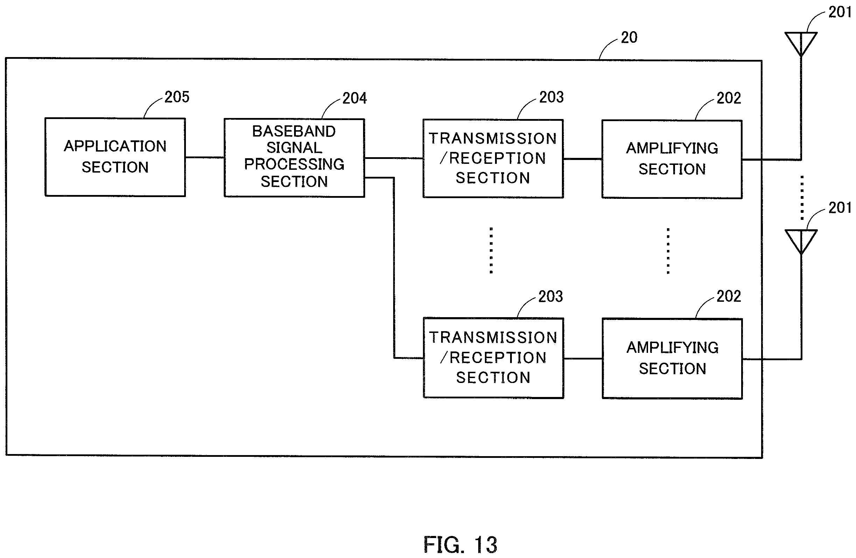

FIG. 13 is a diagram showing one example of an entire configuration of the user terminal according to this Embodiment. The user terminal 20 is provided with a plurality of transmission/reception antennas 201, amplifying sections 202, transmission/reception sections 203, baseband signal processing section 204, and application section 205. In addition, with respect to each of the transmission/reception antenna 201, amplifying section 202, and transmission/reception section 203, the user terminal is essentially configured to include at least one or more.

Radio-frequency signals received in the transmission/reception antennas 201 are respectively amplified in the amplifying sections 202. Each of the transmission/reception sections 203 receives the downlink signal amplified in the amplifying section 202. The transmission/reception section 203 performs frequency conversion on the received signal into a baseband signal to output to the baseband signal processing section 204. The transmission/reception section 203 is capable of being comprised of a transmitter/receiver, transmission/reception circuit or transmission/reception apparatus explained based on the common recognition in the technical field according to the present invention. In addition, the transmission/reception section 203 may be comprised as an integrated transmission/reception section, or may be comprised of a transmission section and reception section.

The transmission/reception section 203 transmits a plurality of pieces of CSI to the radio base station 10. The transmission/reception section 203 may transmit a plurality of PMIs as a plurality of pieces of CSI to the radio base station 10. Alternatively, in addition to a plurality of PMIs, the transmission/reception section 203 may transmit a plurality of CQIs that respectively corresponds to the plurality of PMIs to the radio base station 10. Alternatively, in addition to the above-mentioned plurality of PMIs, the transmission/reception section 203 may transmit a plurality of or a single RI that corresponds to the above-mentioned plurality of PMIs to the radio base station 10. Alternatively, the transmission/reception section 203 may transmit the above-mentioned plurality of PMIs, the above-mentioned plurality of CQIs, and the above-mentioned plurality of or single RI.

Further, the transmission/reception section 203 receives, from the radio base station 10, the downlink signal which is non-orthogonally multiplexed with a downlink signal to another user terminal 20 determined based on the above-mentioned plurality of PMIs and which is multiplied by the same precoding matrix as that of the downlink signal to another user terminal 20.

Furthermore, the transmission/reception section 203 receives the DCI using the PDCCH. The DCI may include the CSI request field. Still furthermore, the transmission/reception section 203 receives the higher layer control information as described above. As described above, the higher layer control information may include the instruction information indicating a plurality of PMIs for the user terminal 20 to transmit and the number of the plurality of PMIs. Further, the higher layer control information may include the instruction information indicating which PMI is required by the value of the CSI request field.

The baseband signal processing section 204 performs FFT processing, error correcting decoding, reception processing of retransmission control and the like on the input baseband signal. User data on downlink is transferred to the application section 205. The application section 205 performs processing concerning layers higher than physical layer and MAC layer, and the like. Further, among the downlink data, broadcast information is also transferred to the application section 205.

On the other hand, for user data on uplink, the data is input to the baseband signal processing section 204 from the application section 205. The baseband signal processing section 204 performs transmission processing of retransmission control (e.g. transmission processing of HARQ), channel coding, precoding, Discrete Fourier Transform (DFT) processing, IFFT processing and the like to transfer to the transmission/reception sections 203. Each of the transmission/reception sections 203 converts the baseband signal output from the baseband signal processing section 204 into a signal with a radio frequency band to transmit. The radio-frequency signals subjected to frequency conversion in the transmission/reception sections 203 are amplified in the amplifying sections 202, and transmitted from the transmission/reception antennas 201, respectively.

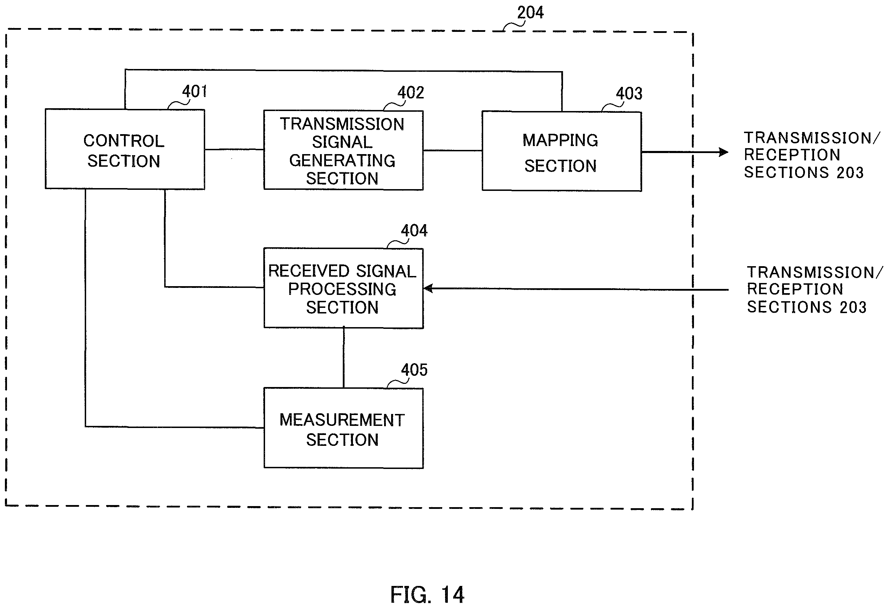

FIG. 14 is a diagram showing one example of a function configuration of the user terminal according to this Embodiment. In addition, FIG. 14 mainly illustrates function blocks of a characteristic portion in this Embodiment, and the user terminal 20 is assumed to have other function blocks required for radio communication. As shown in FIG. 14, the baseband signal processing section 204 that the user terminal 20 has is provided with a control section 401, transmission signal generating section 402, mapping section 403, received signal processing section 404, and measurement section 405.

The control section 401 performs control of the entire user terminal 20. The control section 401 is capable of being comprised of a controller, control circuit or control apparatus explained based on the common recognition in the technical field according to the present invention.

For example, the control section 401 controls generation of signals by the transmission signal generating section 402, and assignment of signals by the mapping section 403. Further, the control section 401 controls reception processing of signals by the received signal processing section 404, and measurement of signals by the measurement section 405.

The control section 401 acquires the downlink control signal (signal transmitted on the PDCCH/EPDCCH) and downlink data signal (signal transmitted on the PDSCH) transmitted from the radio base station 10 from the received signal processing section 404. Based on the downlink control signal, a result of judging necessity of retransmission control to the downlink data signal and the like, the control section 401 controls generation of the uplink control signal (e.g. receipt conformation signal (HARQ-ACK) and the like) and uplink data signal.

Further, the control section 401 determines a plurality of pieces of CSI to transmit to the radio base station 10 as feedback. Specifically, the control section 401 may determine the best PMI and second best PMI, based on a propagation environment measured by the measurement section 405. Furthermore, the control section 401 may determine PMIs of from the best to an nth (n≥2) best. Still furthermore, the control section 401 may determine the CQIs and/or the RI that corresponds to the PMIs.

Moreover, based on the bitmap ((also called code Book Subset Restriction) included in the higher layer control information, the control section 401 may determine a plurality of PMIs to transmit to the radio base station 10 as feedback (Aspect 2). Further, the control section 401 may determine the CQIs and/or the RI that corresponds to the PMIs.

Further, the control section 401 may control the transmission signal generating section 402 and the mapping section 403 so as to periodically transmit a plurality of PMIs determined as described above in respective different subframes (Aspect 1, FIG. 8). In addition, in addition to the above-mentioned plurality of PMIs, the sections may be controlled so as to transmit a plurality of CQIs that respectively corresponds to the above-mentioned plurality of PMIs, transmit a plurality of/single RI that respectively corresponds to the above-mentioned plurality of PMIs, or to transmit the above-mentioned plurality of CQIs and a plurality of/single RI.

Furthermore, in the case of receiving the DCI including the CSI request field with a value indicative of a transmission instruction using the PDCCH, the control section 401 may control the transmission signal generating section 402 and the mapping section 403 so as to transmit the above-mentioned plurality of PMIs using the PUSCH indicated by the DCI (Aspect 3). In addition, in addition to the above-mentioned plurality of PMIs, the sections may be controlled so as to transmit a plurality of CQIs that respectively corresponds to the above-mentioned plurality of PMIs, transmit a plurality of/single RI that respectively corresponds to the above-mentioned plurality of PMIs, or to transmit the above-mentioned plurality of CQIs and a plurality of/single RI.

Still furthermore, based on the instruction information (higher layer control information) indicating which PMI is required by a value of the CSI request field and the value of the CSI request field included in the DCI, the control section 401 may determine PMIs to transmit to the radio base station 10 as feedback (Aspect 4, FIG. 9). The control section 401 may control the transmission signal generating section 402 and the mapping section 403 so as to transmit the determined PMIs using the PUSCH indicated by the above-mentioned DCI. In addition, in addition to the above-mentioned plurality of PMIs, the sections may be controlled so as to transmit a plurality of CQIs that respectively corresponds to the above-mentioned plurality of PMIs, transmit a plurality of/single RI that respectively corresponds to the above-mentioned plurality of PMIs, or to transmit the above-mentioned plurality of CQIs and a plurality of/single RI.

Based on instructions from the control section 401, the transmission signal generating section 402 generates uplink signals to output to the mapping section 403. The transmission signal generating section 402 is capable of being comprised of a signal generator, signal generating circuit or signal generating apparatus explained based on the common recognition in the technical field according to the present invention.

For example, based on instructions from the control section 401, the transmission signal generating section 402 generates the uplink control signal concerning the receipt conformation signal (HARQ-ACK) and channel state information (CSI). Further, based on instructions from the control section 401, the transmission signal generating section 402 generates the uplink data signal. For example, when a UL grant is included in the downlink control signal notified from the radio base station 10, the transmission signal generating section 402 is instructed to generate the uplink data signal from the control section 401.

Based on instructions from the control section 401, the mapping section 403 maps the uplink signal generated in the transmission signal generating section 402 to radio resources to output to the transmission/reception section 203. The mapping section 403 is capable of being comprised of a mapper, mapping circuit or mapping apparatus explained based on the common recognition in the technical field according to the present invention.

The received signal processing section 404 performs reception processing (e.g. demapping, demodulation, decoding and the like) on the received signal input from the transmission/reception section 203. Herein, for example, the received signal is the downlink signal (downlink control signal, downlink data signal and the like) transmitted from the radio base station 10. The received signal processing section 404 is capable of being comprised of a signal processor, signal processing circuit or signal processing apparatus explained based on the common recognition in the technical field according to the present invention. Further, the received signal processing section 404 is capable of constituting the reception section according to the present invention.

Further, the received signal processing section 404 is capable of actualizing the MMSE section, demodulation decoding section, interference replica generating section, interference cancellation section and the like in FIG. 3. In addition, FIG. 3 illustrates the example of using the SIC type interference canceller such as the CWIC, but the invention is not limited thereto. The received signal processing section 404 is capable of also actualizing a configuration using the R-ML as the interference canceller.

The received signal processing section 404 outputs information decoded by the reception processing to the control section 401. For example, the received signal processing section 404 outputs the broadcast information, system information, higher layer control information, DCI and the like to the control section 401. Further, the received signal processing section 404 outputs the received signal and signal subjected to the reception processing to the measurement section 405.

The measurement section 405 performs measurement on the received signal. The measurement section 405 is capable of being comprised of a measurement device, measurement circuit or measurement apparatus explained based on the common recognition in the technical field according to the present invention.

For example, the measurement section 405 may measure received power (e.g. RSRP (Reference Signal Received Power)), received quality (e.g. RSRQ (Reference Signal Received Quality)), channel state (propagation environment) and the like of the received signal. The measurement result is output to the control section 401. The measurement section 405 is capable of actualizing the channel estimation section in FIG. 3. In addition, the measurement section 405 may perform the above-mentioned measurement using the CRS multiplexed into the received signal, or may perform the above-mentioned measurement using the CSI-RS multiplexed into the received signal.

In addition, in the above-mentioned Embodiment, as one example, the user terminal is assumed to receive the downlink signal using the NOMA scheme, but the invention is not limited thereto. As long as the downlink signal received in the user terminal is a downlink signal multiplexed (e.g. power-multiplexed) into the same radio resources as those of a downlink signal to another user terminal, the downlink signal may be any signal. In other words, as another Embodiment of the present invention, the user terminal 20 is the user terminal 20 that receives a downlink signal, and may be provided with a transmission section that transmits a plurality of precoding matrix indicators (PMIs) to the radio base station 10, and a reception section that receives, from the radio base station 10, a downlink signal that is multiplexed (e.g. power-multiplexed) with a downlink signal to another user terminal 20 determined based on the plurality of PMIs and that is multiplied by the same precoding matrix as that of the downlink signal to another user terminal 20. Further, the radio base station 10 is the radio base station 10 that transmits a downlink signal, and may be provided with a reception section that receives a plurality of PMIs from each user terminal 20, a control section that determines a plurality of user terminals 20 of which downlink signals are multiplexed (e.g. power-multiplexed) based on the plurality of PMIs, and a transmission section that multiplies each of downlink signals to the plurality of user terminals by the same precoding matrix to transmit.

In addition, the block diagrams used in explanation of the above-mentioned Embodiment show blocks on a function-by-function basis. These function blocks (configuration section) are actualized by any combination of hardware and software. Further, the means for actualizing each function block is not limited particularly. In other words, each function block may be actualized by a single physically combined apparatus, or two or more physically separated apparatuses are connected by cable or radio, and each function block may be actualized by a plurality of these apparatuses.

For example, a part or the whole of each of functions of the radio base station 10 and user terminal 20 may be actualized using hardware such as ASIC (Application Specific Integrated Circuit), PLD (Programmable Logic Device), and FPGA (Field Programmable Gate Array). Further, each of the radio base station 10 and user terminal 20 may be actualized by a computer apparatus including a processor (CPU: Central Processing Unit), communication interface for network connection, memory, and computer-readable storage medium holding programs. In other words, the radio base station, user terminal and the like according to one Embodiment of the present invention may function as a computer for performing processing of the radio communication method according to the invention.

Herein, the processor, memory and the like are connected on the bus to communicate information. Further, for example, the computer-readable storage medium is a storage medium such as a flexible disk, magneto-optical disk, ROM (Read Only Memory), EPROM (Erasable Programmable ROM), CD-ROM (Compact Disc-ROM), RAM (Random Access Memory) and hard disk. Furthermore, the program may be transmitted from a network via an electrical communication line. Still furthermore, each of the radio base station 10 and user terminal 20 may include an input apparatus such as input keys and output apparatus such as a display.

The function configurations of the radio base station 10 and user terminal 20 may be actualized by the above-mentioned hardware, may be actualized by software modules executed by the processor, or may be actualized in combination of the hardware and software modules. The processor operates an operating system to control the entire user terminal. Further, the processor reads the program, software module and data from the storage medium onto the memory, and according thereto, executes various kinds of processing.

Herein, it is essential only that the program is a program for causing the computer to execute each operation described in each of the above-mentioned Embodiments. For example, the control section 401 of the user terminal 20 may be actualized by a control program stored in the memory to operate by the processor, and the other function blocks may be actualized similarly.

Further, software, command and the like may be transmitted and received via a transmission medium. For example, when software is transmitted from a website, server or another remote source using wired techniques such as a coaxial cable, optical fiber cable, twisted pair and Digital Subscriber Line (DSL) and/or wireless techniques such as infrared, radio wave and microwave, these wired techniques and/or wireless techniques are included in the definition of the transmission medium.

In addition, each term explained in the present Description and/or required to understand the present Description may be replaced with a term having the same or similar meaning. For example, the radio resource may be indicated by an index. Further, the channel and/or symbol may be a signal (signaling). Furthermore, the signal may be a message. Still furthermore, a component carrier (CC) may be called a carrier frequency, cell and the like.

Each Aspect/Embodiment shown in the present Description may be used alone, may be used in combination, or may be switched and used according to execution. Further, notification of predetermined information (e.g. notification of "being X") is not limited to notification that is performed explicitly, and may be performed implicitly (e.g. notification of the predetermined information is not performed.)

Notification of information is not limited to the Aspect/Embodiment shown in the present Description, and may be performed by another method. For example, the notification of information may be performed by physical layer signaling (e.g. DCI (Downlink Control Information), UCI (Uplink Control Information)), higher layer signaling (e.g. RRC (Radio Resource Control) signaling), MAC (Medium Access Control) signaling, broadcast information (MIB (Master Information Block), SIB (System Information Block))), another signal or combination thereof. Further, for example, the RRC signaling may be an RRC Connection Setup message, RRC Connection Reconfiguration message and the like.

The information, signal and the like shown in the present Description may be represented by using any one of various different techniques. For example, the data, order, command, information, signal, bit, symbol, chip and the like capable of being described over the entire above-mentioned explanation may be represented by voltage, current, electromagnetic wave, magnetic field or magnetic particle, optical field or photon, or any combination thereof.

Each Aspect/Embodiment shown in the present Description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802. 11 (Wi-Fi), IEEE 802. 16 (WiMAX), IEEE 802. 20, UWB (Ultra-WideBand), Bluetooth (Registered Trademark), system using another proper system and/or the next-generation system extended based thereon.

With respect to the processing procedure, sequence, flowchart and the like of each Aspect/Embodiment shown in the present Description, unless there is a contradiction, the order may be exchanged. For example, with respect to the methods shown in the present Description, elements of various steps are presented by illustrative order, and are not limited to the presented particular order.

As described above, the present invention is specifically described, but it is obvious to a person skilled in the art that the invention is not limited to the Embodiment described in the present Description. The invention is capable of being carried into practice as modified and changed aspects without departing from the subject matter and scope of the invention defined by the descriptions of the scope of the claims. Accordingly, the descriptions of the present Description are intended for illustrative explanation, and do not have any restrictive meaning to the invention.

The present application is based on Japanese Patent Application No. 2015-104879 filed on May 22, 2015, entire content of which is expressly incorporated by reference herein.

## Claims

1. A user terminal that receives a downlink signal using a Non-Orthogonal Multiple Access (NOMA) scheme, comprising:
a transmission section that transmits a plurality of precoding matrix indicators (PMIs) to a radio base station; and
a reception section that receives, from the radio base station, a downlink signal that is non-orthogonally multiplexed with a downlink signal to another user terminal determined based on the plurality of PMIs and that is multiplied by the same precoding matrix as that of the downlink signal to the another user terminal.

2. The user terminal according to claim 1, wherein the plurality of PMIs is at least a best PMI and a next best PMI determined based on a propagation environment of the user terminal.

3. The user terminal according to claim 1, wherein the plurality of PMIs is indicated by higher layer signaling.

4. The user terminal according to any one of claims 1 to 3, wherein the transmission section periodically transmits the plurality of PMIs in respective different subframes.

5. The user terminal according to any one of claims 1 to 3, wherein the reception section receives downlink control information (DCI) including a request field of channel state information (CSI) using a downlink control channel, and
the transmission section transmits the plurality of PMIs using an uplink shared channel indicated by the DCI.

6. The user terminal according to claim 1, wherein the reception section receives downlink control information (DCI) including a request field of channel state information (CSI) using a downlink control channel, and further, receives instruction information indicating which PMI is required by a value of the request field by higher layer signaling, and
the transmission section transmits the PMI determined based on the value of the request field and the instruction information, using an uplink shared channel indicated by the DCI.

7. The user terminal according to any one of claims 1 to 6, wherein the transmission section transmits a plurality of channel quality indicators (CQIs) that respectively corresponds to the plurality of PMIs in addition to the plurality of PMIs, transmits a single or a plurality of rank indicators (RIs) that respectively corresponds to the plurality of PMIs in addition to the plurality of PMIs, or transmits the plurality of CQIs and the single or the plurality of RIs in addition to the plurality of PMIs.

8. A radio base station that transmits a downlink signal using a Non-Orthogonal Multiple Access (NOMA) scheme, comprising:
a reception section that receives a plurality of precoding matrix indicators (PMIs) from each user terminal;
a control section that determines a plurality of user terminals of which downlink signals are subjected to non-orthogonal multiplexing, based on the plurality of PMIs; and
a transmission section that multiplies each of the downlink signals to the plurality of user terminals by the same precoding matrix to transmit.

9. The radio base station according to claim 8, wherein the control section determines to perform non-orthogonal multiplexing on a plurality of user terminals from which the reception section receives a common PMI, and
the transmission section multiplies each of the downlink signals to the plurality of user terminals by a precoding matrix indicated by the common PMI.

10. A radio communication method in a user terminal that receives a downlink signal using a Non-Orthogonal Multiple Access (NOMA) scheme, including:
transmitting a plurality of precoding matrix indicators (PMIs) to a radio base station; and
receiving, from the radio base station, a downlink signal that is non-orthogonally multiplexed with a downlink signal to another user terminal determined based on the plurality of PMIs and that is multiplied by the same precoding matrix as that of the downlink signal to the another user terminal.
